# EUROPÄISCHE PATENTSCHRIFT

(11) **EP 4 116 620 B1**
(45) Veröffentlichungstag und Bekanntmachung des Hinweises auf die Patenterteilung: **18.02.2026**
(21) Anmeldenummer: 21184831.2
(22) Anmeldetag: 09.07.2021
(51) Int. Cl.: F16P 3/14, G01V 8/20, G05B 9/03

(54) **ÜBERWACHUNGSEINRICHTUNG UND VERFAHREN ZUM BETRIEB EINER ÜBERWACHUNGSEINRICHTUNG**
MONITORING DEVICE AND METHOD FOR OPERATING SAME
DISPOSITIF DE SURVEILLANCE ET PROCÉDÉ DE FONCTIONNEMENT D'UN DISPOSITIF DE SURVEILLANCE

(43) Veröffentlichungstag der Anmeldung: 11.01.2023
(73) Patentinhaber: Leuze electronic GmbH + Co. KG, 73277 Owen/Teck (DE)
(72) Erfinder: Feller, Bernhard, 86316 Friedberg (DE); Rohbeck Dr., Volker, 85244 Röhrmoos (DE)
(74) Vertreter: Ruckh, Rainer Gerhard

(56) Entgegenhaltungen:
- DE-A1- 10 011 410
- DE-A1- 10 243 713
- DE-A1- 10 350 927
- DE-T5- 112016 000 264

## Beschreibung

Die Erfindung betrifft eine Überwachungseinrichtung und ein Verfahren zum Betrieb einer Überwachungseinrichtung.

Derartige Überwachungseinrichtungen werden im Bereich der Sicherheitstechnik, insbesondere im Bereich des Personenschutzes eingesetzt. Insbesondere werden diese Überwachungseinrichtungen zur Gefahrenbereichsüberwachung an gefahrbringenden Anlagen eingesetzt, wobei derartige Anlagen stationäre Maschinen oder auch Fahrzeuge wie zum Beispiel fahrerlose Transportfahrzeuge sein können.

Für eine Gefahrenbereichsüberwachung weist die Überwachungseinrichtung als Sicherheitsgerät einen Sensor auf, der typischerweise für eine Schutzfeldüberwachung ausgebildet ist. Beispiele für derartige Sensoren sind Lichtvorhänge oder Flächendistanzsensoren, das heißt scannende Distanzsensoren.

Zur Erfüllung der sicherheitstechnischen Anforderungen weist der Sensor eine mehrkanalige, insbesondere zweikanalige Rechnerstruktur für eine fehlersichere Auswertung der Sensorsignale des Sensors auf.

Die Funktion einer solchen Überwachungseinrichtung ist derart, dass in den Rechnerstruktur Sensorsignale des Sensors ausgewertet werden um festzustellen, ob ein Objekteingriff im Schutzfeld vorhanden ist oder nicht und abhängig von dieser Auswertung Schaltsignale generiert werden, die über wenigstens einen Schaltausgang in die die Anlage steuernde Anlagensteuerung ausgegeben werden. Der Schaltausgang ist ein binärer Ausgang mit den Schaltzuständen "abgeschaltet" und "eingeschaltet".

Wird mit dem Sensor kein Objekt im Schutzfeld detektiert, liegt keine Gefahrensituation vor und demzufolge wird der Schaltausgang eingeschaltet, wodurch der Betrieb der Anlage freigegeben ist.

Wird dagegen mit dem Sensor ein Objekt im Schutzfeld registriert, liegt eine Gefahrensituation vor und der Schaltausgang wird abgeschaltet, wodurch die Anlage in einen sicheren Zustand versetzt wird, insbesondere abgeschaltet wird.

Wird in der Rechnerstruktur ein Fehler aufgedeckt, wird ebenfalls der Schaltausgang abgeschaltet, da dann kein fehlerfreier Betrieb des Sensors mehr gewährleistet ist.

Die DE 103 50 927 A1 betrifft ein Lichtgitter zur Erfassung von Objekten in einem Überwachungsbereich mit einer Sendereinheit mit einer Anzahl von Sendelichtstrahlen emittierenden Sendern, mit einer Empfängereinheit mit einer Anzahl von Empfängern, wobei jedem Sender ein Empfänger zur Bildung einer Strahlachse zugeordnet ist, so dass bei freiem Strahlengang die von dem jeweiligen Sender emittierten Sendelichtstrahlen auf den zugeordneten Empfänger geführt sind, und mit einer Auswerteeinheit zur Auswertung der an den Empfängern anstehenden Empfangssignale, wobei in dieser bei einer durch einen Objekteingriff im Überwachungsbereich bedingten Unterbrechung wenigstens einer Strahlachse ein Objektfeststellungssignal generiert wird. Die Auswerteeinheit ist von einem digitalen Signalprozessor gebildet.

Die DE 102 43 713 A1 betrifft eine Steuergeräteanordnung mit mehreren über einen ersten Datenbus vernetzten Steuergeräten in einem Verkehrsmittel, wobei bezüglich einer Steuerfunktion redundant ausgelegte Steuergeräte vorhanden sind und den redundant ausgelegten Steuergeräten jeweils ein Datenbustrennschalter zugeordnet ist, welcher den Datenbus abhängig von einem Bewertungssignal durchschaltet oder unterbricht. Zur Optimierung der redundanten Anordnung ist jeder dieser Datenbustrennschalter mit einer Signalleitung mindestens eines weiteren redundanten Steuergerätes verbunden, ein weiteres redundantes Steuergerät überträgt ein Bewertungssignal an den einem ersten redundanten Steuergerät zugeordneten Datenbustrennschalter, wobei das Bewertungssignal das Ergebnis einer Funktionsprüfung des Weiteren redundanten Steuergerätes bezüglich des ersten redundanten Steuergeräts ist. Der Datenbustrennschalter des ersten redundanten Steuergeräts unterbricht in Abhängigkeit des Ergebnisses einer Logikschaltung den Datenbus, wobei mindestens ein Eingangs-Signal der Logikschaltung von dem mindestens einen Bewertungssignal gebildet wird.

Die DE 11 2016 000 264 T5 betrifft ein_Sicherheitssteuersystem, das eine Steuereinheit, eine Sicherheitssensoranordnung und eine Maschinenanordnung beinhaltet, die in verschiedenen Betriebsmodi betreibbar sind, wobei jeder eine andere Produktivität der Maschinenanordnung aufweist. Die Steuereinheit aktiviert einen Betriebsmodus der Maschinenanordnung, wobei die mindestens eine Sicherheitssensoranordnung zwei funktionell redundante Untersysteme aufweist. Eine Eingabe in die Steuereinheit beinhaltet Informationen, die eine Verfügbarkeit der Untersysteme angeben. Die Steuerlogik kann einen normalen Betriebsmodus mit normaler Produktivität aktivieren, falls alle Untersysteme verfügbar sind, einen Ausfall-Stopp-Betriebsmodus mit einer Null-Produktivität bei einer Nichtverfügbarkeit aller Untersysteme aktivieren und einen Ausfall-Funktionieren-Betriebsmodus mit einer Produktivität, die von Null verschieden und niedriger als normal ist, bei einer Nichtverfügbarkeit von mindestens einem und einer Verfügbarkeit von mindestens einem anderen Untersystem aktivieren.

Der Erfindung liegt die Aufgabe zugrunde, eine Überwachungseinrichtung bereitzustellen, mittels der eine sichere Überwachung einer externen Einheit gewährleistet ist, ohne deren Verfügbarkeit unnötig einzuschränken.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Überwachungseinrichtung mit einem eine mehrkanalige Struktur aufweisenden Sicherheitsgerät. Das Sicherheitsgerät ist ein Sensor, wobei das Sicherheitsgerät Schaltausgänge aufweist, über welche Schaltsignale an eine externe Einheit ausgebbar sind, wodurch der Betrieb der externen Einheit steuerbar ist. Das Sicherheitsgerät weist wenigstens zwei Kanäle mit einer Logikeinheit auf, wobei in jeder Logikeinheit, abhängig von einem Vorhandensein einer Gefahrensituation Schaltsignale generiert werden, die über einen Schaltausgang dieses Kanals ausgebbar sind. Bei fehlerfreiem Betrieb und Nichtvorhandensein einer Gefahrensituation ist der Betrieb der externen Einheit durch das Sicherheitsgerät uneingeschränkt freigegeben, in dem alle Schalteingänge eingeschaltet sind. In jeder Logikeinheit sind Fehlererkennungsmittel vorgesehen, mittels derer Fehler in diesen Logikeinheiten aufdeckbar sind. Bei Aufdecken eines Fehlers wird in einem Kanal dessen Schaltausgang abgeschaltet und über den anderen Kanal wird ein degradierter Betrieb der externen Einheit aufrechterhalten, wobei mit dem verbleibenden fehlerfreien Kanal eine reduzierte Sensorauswertung erfolgt.

Die Erfindung betrifft weiterhin ein Verfahren zum Betrieb einer Überwachungseinrichtung.

Die erfindungsgemäße Überwachungseinrichtung wird allgemein im Bereich der Sicherheitstechnik, insbesondere im Bereich des Personenschutzes, eingesetzt.

Mit der erfindungsgemäßen Überwachungseinrichtung wird ein sicherer Betrieb einer externen Einheit dadurch gewährleistet, dass ein Sicherheitsgerät zur Erfüllung von Überwachungsfunktionen eingesetzt wird. Das Sicherheitsgerät weist eine mehrkanalige Struktur auf, wobei jeder Kanal eine Logikeinheit aufweist, die, abhängig von einem Vorhandensein einer Gefahrensituation Schaltsignale generiert, die über einen Schaltausgang des Kanals an die externe Einheit ausgegeben werden, um den Betrieb der externen Einheit zu steuern. Vorteilhaft weist das Sicherheitsgerät zwei Kanäle auf. Generell können auch mehr als zwei Kanäle vorgesehen sein.

Die Schaltausgänge sind generell digitale Ausgänge, über welche binäre Schaltsignale ausgegeben werden. Je nach Schaltzustand des Schaltsignals ist der Schaltausgang eingeschaltet oder ausgeschaltet.

Bei fehlerfreiem Betrieb und bei Nichtvorhandensein einer Gefahrensituation ist der Betrieb der externen Einheit durch das Sicherheitsgerät uneingeschränkt freigegeben, indem alle Schaltausgänge eingeschaltet sind.

Erfindungsgemäß wird mit dem Sicherheitsgerät ein degradierter Betrieb der externen Einheit für den Fall freigegeben, wenn zwar in einem Kanal des Sicherheitsgeräts ein Fehler festgestellt wird, nicht aber in dem wenigstens einen weiteren Kanal. In diesem Fall wird der Schaltausgang des Kanals, in welchem der Fehler festgestellt wird, abgeschaltet. Dies signalisiert der externen Einheit den degradierten Betrieb, das heißt die externe Einheit wird dadurch in den Modus des degradierten Betriebs versetzt. Der wenigstens eine weitere Kanal, in dem kein Fehler festgestellt wird, übernimmt dann die Überwachungsfunktion als Voraussetzung für die Aufrechterhaltung des degradierten Betriebs.

Der degradierte Betrieb ist gegenüber dem uneingeschränkten Betrieb eingeschränkt, wobei die mit dem verbleibenden fehlerfreien Kanal durchgeführte Überwachung ausreichend ist, einen sicheren degradierten Betrieb zu gewährleisten.

Bei Aufdecken eines Fehlers in einem Schaltausgang oder bei Aufdecken eines Fehlers in beiden Logikeinheiten werden alle Schaltausgänge abgeschaltet, wodurch der externen Einheit ein Systemausfall signalisiert wird.

Dadurch wird eine erhöhte Fehlersicherheit der Überwachungseinrichtung erzielt. Bei Auftreten von Fehlern im Gesamtsystem des Sicherheitsgeräts, das heißt in allen Kanälen und/oder bei Detektion in den Schaltausgängen, ist ein sicherer Betrieb der externen Einheit nicht mehr gewährleistet, so dass diese durch Abschalten der Schaltausgänge in einen sicheren Zustand überführt wird, insbesondere abgeschaltet wird.

Damit sind einerseits die Anforderungen für den Einsatz der Überwachungseinrichtung im Bereich der Sicherheitstechnik erfüllt, da sowohl im uneingeschränkten Betrieb als auch im degradierten Betrieb die jeweiligen Sicherheitsanforderungen erfüllt werden.

Gleichzeitig wird im Vergleich zu bekannten Überwachungseinrichtungen deren Verfügbarkeit, insbesondere die Verfügbarkeit der externen Einheit erhöht, in dem bei Auftreten eines Fehlers in nur einem Kanal die externe Einheit nicht sofort stillgesetzt wird, sondern im degradierten Betrieb weiterbetrieben werden kann.

Die externe Einheit kann beispielsweise von einer Anlage gebildet sein, von der Gefahren für Personen ausgehen können. Derartige Anlagen können stationäre Maschinen oder auch Fahrzeuge wie fahrerlose Transportfahrzeuge sein.

Das Sicherheitsgerät kann beispielsweise von einer Steuerung, insbesondere einer sicheren Steuerung gebildet sein. Dabei kann diese insbesondere von der Anlagensteuerung gebildet sein, die die Anlage steuert.

Erfindungsgemäß ist das Sicherheitsgerät ein Sensor, der insbesondere eine einkanalige Struktur ausbilden kann.

Besonders vorteilhaft ist der Sensor für die Überwachung eines Schutzfelds ausgebildet.

Damit kann mit dem Sensor ein flächiger oder räumlicher Gefahrenbereich an der Anlage überwacht werden. Die Grundstruktur eines derartigen Sensors ist derart, dass mit diesem festgestellt wird, ob ein Objekt im Schutzfeld vorhanden ist oder nicht, wobei bei freiem Schutzfeld der Betrieb der Anlage freigegeben wird, indem die Schaltausgänge der Kanäle eingeschaltet werden. Entsprechend wird die Anlage in den sicheren Zustand durch Abschalten der Schaltausgänge versetzt, falls ein Objekteingriff im Schutzfeld registriert wird.

Vorteilhaft ist der Sensor ein optischer Sensor oder ein Radarsensor. Insbesondere ist der Sensor ein Lichtvorhang, ein Kamerasensor oder ein Flächendistanzsensor.

Gemäß einer ersten Variante weist der Sensor eine Sensoreinheit mit mehreren Sensorbereichen auf, wobei jeweils ein Sensorbereich einem Kanal zugeordnet ist.

Mit den einzelnen Sensorbereichen können unterschiedliche Bereiche des Schutzfelds des Sensors überwacht werden, wobei sich diese auch überlappen können.

Insbesondere bei einem als Lichtvorhang ausgebildeten Sensor, der eine Anordnung mehrerer Strahlachsen aufweist, die jeweils von Sender-Empfänger-Paaren einzelner Lichtschranken gebildet sind, können die Strahlachsen alternierend unterschiedlichen Sensorbereichen zugeordnet sein. Mit jedem Sensorbereich erfolgt dann eine Überwachung des gesamten Gefahrenbereichs, jedoch mit einer reduzierten Auflösung im Vergleich zu einer erhöhten Auflösung, die mit allen Strahlachsen erhalten wird.

Bei dieser Variante sind somit mehrkanalige Sensoreingabesignale vorgesehen, die den einzelnen Kanälen zugeordnet sind.

Gemäß einer zweiten Variante weist der Sensor eine Sensoreinheit auf, die allen Kanälen zugeordnet ist.

Bei dieser Variante sind einkanalige Sensoreingabesignale vorgesehen, die allen Kanälen zugeführt werden, wobei dann in den Logikeinheiten unterschiedliche Differenzierungen dieser Sensoreingabesignale erfolgen können.

Im fehlerfreien Betrieb des Sensors, das heißt des Sicherheitsgeräts liegt in keinem der Kanäle ein Fehler vor, so dass in allen Kanälen Sensorsignale ausgesendet werden, das heißt alle Sensorbereiche werden überwacht. Damit wird mit dem Sensor das jeweilige Schutzfeld vollständig überwacht.

Wird mit dem Sensor kein Objekt im Schutzfeld detektiert, werden die Schaltausgänge aller Kanäle eingeschaltet und es wird ein uneingeschränkter Betrieb der Anlage freigegeben.

Liegt in einem der Kanäle ein Fehler vor, wird über deren Logikeinheit der Schaltausgang dieses Kanals abgeschaltet, wodurch der externen Einheit, insbesondere der Anlagensteuerung der Anlage der degradierte Betrieb signalisiert wird, das heißt die externe Einheit beziehungsweise Anlage wechselt in den degradierten Betrieb.

Mit dem wenigstens einen verbleibenden fehlerfreien Kanal erfolgt eine reduzierte Sensorauswertung derart, dass nur bestimmte Sensorbereiche überwacht werden. Dies kann dadurch gegeben sein, dass nur Teile des Gefahrenbereichs an der Anlage überwacht werden. Demzufolge können im degradierten Betrieb nur Teilbewegungen mit der Anlage zugelassen werden, die im sich überwachten Teil des Gefahrenbereichs erfolgen.

Weiterhin kann mit dem noch fehlerfrei arbeitenden Kanal eine reduzierte Auflösung des Sensors bei den Objektdetektionen im Schutzfeld gegeben sein.

In diesem Fall kann ein degradierter Betrieb beispielsweise mit reduzierter Geschwindigkeit Arbeitsvorgänge durchführen. Bei einer reduzierten Geschwindigkeit von Anlagenteilen kann es zum Beispiel ausreichend sein, dass nur noch größere Körperteile von Personen wie zum Beispiel Arme erkannt werden müssen, wo eine reduzierte Auflösung des Sensors ausreichend ist. Demgegenüber müssen im uneingeschränkten Betrieb kleine Körperteile von Personen wie zum Beispiel Hände erkannt werden. Da im uneingeschränkten Betrieb alle Kanäle fehlerfrei arbeiten, ergänzen sich deren Sensorbereiche, so dass die erforderliche erhöhte Auflösung des Sensors erzielt wird.

Prinzipiell kann der degradierte Betrieb zeitlich unbeschränkt aufrechterhalten werden. Da jedoch im degradierten Betrieb nur noch eingeschränkte Überwachungsmöglichkeiten gegeben sind, ist es sinnvoll, wenn der degradierte Betrieb nur für eine vorgegebene Zeit aufrechterhalten wird.

Dabei wird der degradierte Betrieb durch Abschalten aller Schaltausgänge beendet.

Falls während des degradierten Betriebs die Betriebsspannung unterbrochen wird, sollte der degradierte Betrieb nach dem Wiedereinschalten die bereits abgelaufene Betriebszeit im degradierten Betrieb in vorherigen Einschaltphasen berücksichtigt werden und die restliche Betriebszeit entsprechend reduzieren. Dies kann z.B. dadurch erfolgen, dass die Betriebszeit im degradierten Betrieb laufend in einem nichtflüchtigen Speicher gespeichert wird und nach dem Widereinschalten diese bereits aufgelaufenen Betriebszeiten mit degradiertem Betrieb im laufenden Betrieb berücksichtigt werden und die verbleibende Zeit des degradierten Betriebs reduziert wird.

Gemäß einer vorteilhaften Ausführungsform sind in jeder Logikeinheit Fehlererkennungsmittel vorgesehen, mittels derer Fehler in diesen Logikeinheiten aufdeckbar sind.

Die Logikeinheiten sind generell Rechnereinheiten, wobei mit den dort zweckmäßig in Form von Softwareroutinen integrierten Fehlererkennungsmittel Selbsttests zur Fehlerkontrolle durchgeführt werden. Weiterhin können mit den Logikeinheiten Fehler in den Sensoreinheiten des Sensors aufgedeckt werden.

Gemäß einer weiteren vorteilhaften Ausführungsform werden Fehler in einem Schaltausgang eines Kanals in der Logikeinheit des anderen Kanals aufgedeckt.

Insbesondere wird in einem Schaltausgang ein Querschluss oder ein Schluss gegen eine Betriebsspannung erkannt.

Gemäß einer vorteilhaften Weiterbildung ist ein Fehler mittels einer Anzeigeeinheit oder mittels eines zusätzlichen Schaltausgangs signalisierbar.

Die Erfindung wird im Folgenden anhand den Zeichnungen erläutert. Es zeigen:
- Figur 1:: Erstes Ausführungsbeispiel der erfindungsgemäßen Überwachungseinrichtung.
- Figur 2:: Erstes Anwendungsbeispiel für die Überwachungseinrichtung gemäß Figur 1.
- Figur 3:: Zweites Anwendungsbeispiel für die Überwachungseinrichtung gemäß Figur 1.
- Figur 4:: Zweites Ausführungsbeispiel der erfindungsgemäßen Überwachungseinrichtung.

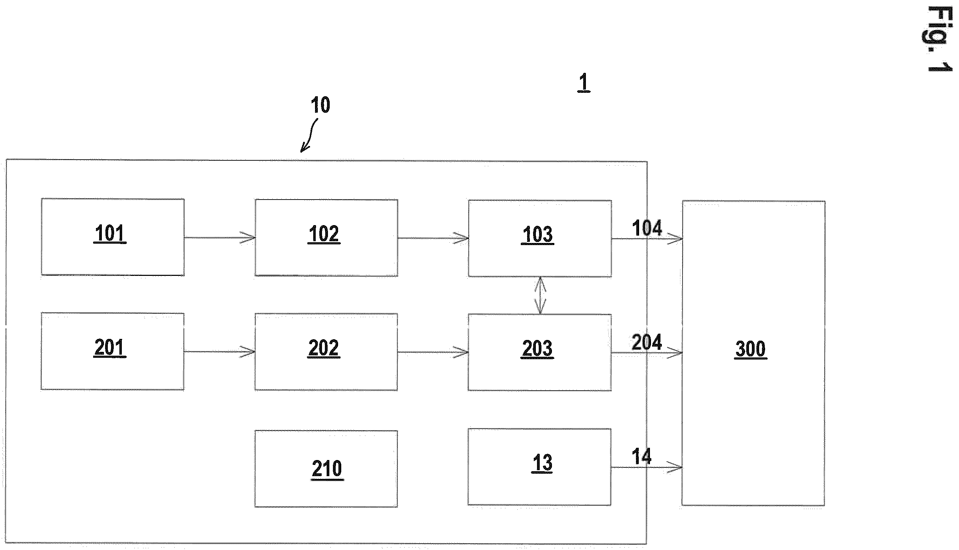

Figur 1 zeigt ein erstes Ausführungseispiel der erfindungsgemäßen Überwachungseinrichtung 1. Die Überwachungseinrichtung 1 umfasst als Sicherheitsgerät einen Sensor 10 mit dem eine Anlagensteuerung 300 einer Anlage gesteuert wird.

Der Sensor 10 ist zur Überwachung eines Schutzfelds ausgebildet. Dabei kann der Sensor 10 generell als optischer Sensor oder als Radarsensor ausgebildet sein. Insbesondere kann der Sensor 10 als Kamerasensor ausgebildet sein. Weiterhin kann der Sensor 10 als Flächendistanzsensor, das heißt als scannender Distanzsensor ausgebildet sein. Im vorliegenden Fall ist der Sensor 10 als Lichtvorhang ausgebildet.

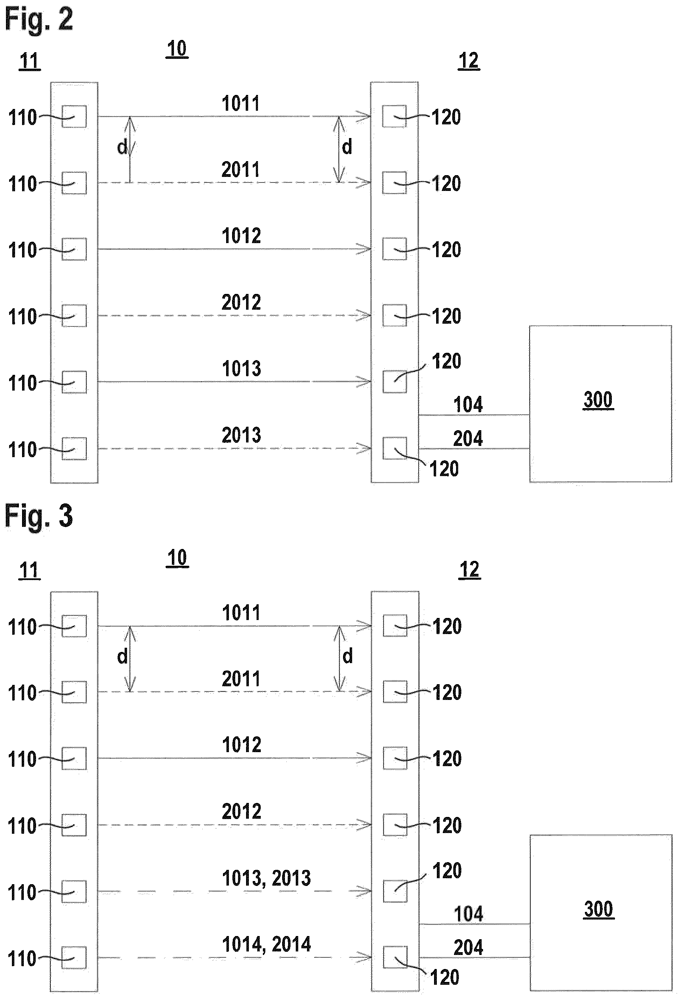

Die Figuren 2 und 3 zeigen die Sensoreinheit des Lichtvorhangs. Der Lichtvorhang weist eine in einem ersten Gehäuse angeordnete Sendereinheit 11 mit einer Reihenanordnung von Lichtstrahlen 1011, 2011, 1012, 2012, 1013, 2013 (1014, 2014) emittierenden Sendern 110 auf. Weiterhin weist der Lichtvorhang eine in einem zweiten Gehäuse angeordnete Empfängereinheit 12 mit einer Reihenanordnung von Empfängern 120 auf. Die Sender 110 können von Lichtdioden, die Empfänger 120 von Photodioden gebildet sein.

Die Aktivierung der Sender 110 erfolgt über eine nicht dargestellte Sendersteuerung, die Aktivierung der Empfänger 120 erfolgt über eine nicht dargestellte Empfängersteuerung. Der Lichtvorhang ist über die Lichtstrahlen 1011, 2011, 1012, 2012, 1013, 2013 (1014, 2014) in bekannter Weise optisch so synchronisiert, dass einzelne Strahlachsen bildende Sender-Empfänger-Paare zyklisch einzeln nacheinander aktiviert werden.

Mit den Sender-Empfänger-Paaren wird ein flächiges Schutzfeld überwacht. Bei jedem Sender-Empfänger-Paar sind der Sender 110 und Empfänger 120 gegenüberliegend angeordnet, so dass die vom jeweiligen Sender 110 emittierten Lichtstrahlen 1011, 2011, 1012, 2012, 1013, 2013 (1014, 2014) bei freiem Schutzfeld ungehindert auf den Empfänger 120 dieses Sender-Empfänger-Paars treffen. Ein Objekt wird durch eine Strahlunterbrechung wenigstens einer Strahlachse detektiert.

Der Sensor 10 der Überwachungseinrichtung 1 gemäß Figur 1 weist eine zweikanalige Struktur auf. Prinzipiell können auch mehr als zwei Kanäle vorgesehen sein.

Bei der Ausführungsform gemäß Figur 1 liefert der Sensor 10, insbesondere der Lichtvorhang gemäß den Figuren 2 und 3 zweikanalige Sensoreingabesignale 101, 201. Im ersten Kanal werden die Sensoreingabesignale 101 in einer Logikeinheit 102 verarbeitet und ausgewertet. Dabei wird ein binäres Schaltsignal 104 generiert, das über einen Schaltausgang 103 ausgegeben wird. Entsprechend werden im zweiten Kanal die Sensoreingabesignale 201 in einer Logikeinheit 202 verarbeitet und ausgewertet. Dabei wird ein binäres Schaltsignal 204 generiert, das über einen Schaltausgang 203 ausgegeben wird.

Die Logikeinheiten 102, 202 sind von Rechnereinheiten gebildet. In den Logikeinheiten 102, 202 sind Fehlererkennungsmittel vorgesehen. Mit den Fehlererkennungsmitteln können insbesondere Selbsttests durchgeführt werden um festzustellen, ob die Logikeinheiten 102, 202 fehlerfrei arbeiten. Zudem können mit den Fehlererkennungsmitteln Fehler der Sensoreinheit des Sensors 10 aufgedeckt werden.

Der Schaltausgang 103, 203 eines Kanals wird über die Logikeinheit 102, 202 des anderen Kanals getestet, beispielsweise durch Aussenden von Testimpulsen auf den Schaltausgang 103, 203 und Rücklesen der entsprechenden Antwort des Schaltausgangs 103, 203. Damit können insbesondere Querschlüsse und Schlüsse gegen eine Betriebsspannung als Fehler aufgedeckt werden.

Entsprechend den Schaltzuständen der binären Schaltsignale 104, 204 ist der jeweilige Schaltausgang 103, 203 entweder eingeschaltet oder ausgeschaltet.

Ergeben die Sensoreingabesignale 101, 201 eine Objektdetektion, wird der entsprechende Schaltausgang 103, 203 abgeschaltet. Liegt keine Objektdetektion vor, wird der Schaltausgang 103, 203 eingeschaltet.

Mit dem Sensor 10 wird der Betrieb einer Anlage gesteuert. Hierzu werden die Schaltsignale 104, 204 über die Schaltausgänge 103, 203 einer Anlagensteuerung 300 der Anlage zugeführt.

Wird mit dem Sensor 10 kein Objekt innerhalb des Schutzfelds erfasst und arbeitet der Sensor 10 fehlerfrei, sind beide Schaltausgänge 103, 203 eingeschaltet, so dass ein uneingeschränkter Betrieb der Anlage freigegeben ist.

Wird in beiden Kanälen anhand der Sensoreingabesignale 101, 201 ein Objekt detektiert, werden beide Schaltausgänge 103, 203 abgeschaltet und die Anlage wird in einen sicheren Zustand überführt, insbesondere stillgesetzt.

Wird in einem Kanal mit den Fehlererkennungsmitteln der jeweiligen Logikeinheit 102, 202 ein Fehler festgestellt, wird der Schaltausgang 103, 203 dieses Kanals abgeschaltet.

Der andere Kanal arbeitet jedoch noch fehlerfrei, das heißt die Logikeinheit 102, 202 dieses Kanals wertet die Sensoreingabesignale 101, 201 des Kanals aus.

Erfindungsgemäß wird für diesen Fall ein degradierter Betrieb der Anlage aufrechterhalten. Dies wird der Anlagensteuerung 300 dadurch signalisiert, dass der Schaltausgang 103, 203 des Kanals, in dem der Fehler festgestellt wurde, abgeschaltet wird.

Im degradierten Betrieb kann die Anlage eingeschränkt weiter betrieben werden, beispielsweise derart, dass dann nur bestimmte Arbeitsvorgänge durchgeführt werden, oder dass die Anlage mit reduzierter Geschwindigkeit betrieben wird. Generell ist der degradierte Betrieb so ausgestaltet, dass für diesen mit den im verbleibenden Kanal ausgewerteten Sensoreingabesignale 101, 201 eine hinreichende Gefahrenabsicherung erzielt wird.

Der degradierte Betrieb kann insbesondere nur für eine vorgegebene Zeit aufrechterhalten werden. Vorteilhaft wird der degradierte Betrieb durch Abschalten aller Schaltausgänge 103, 203 beendet.

Der in einem Kanal aufgedeckte Fehler wird mittels eines zusätzlichen Schaltausgangs oder einer Anzeigeeinheit 13 als Fehlermeldung 14 an das Anlagenpersonal oder die Anlagensteuerung 300 ausgegeben.

Wird in einem der Schaltausgänge 103, 203 ein Fehler aufgedeckt, werden alle Schaltausgänge 103, 203 abgeschaltet und die Anlage wird in den sicheren Zustand überführt.

Vorteilhaft sind für den Sensor 10 unterschiedliche Sensorbereiche, insbesondere unterschiedliche Schutzfeldbereiche definiert, wobei für jeden Sensorbereich separate Sensoreingabesignale 101, 201 gebildet werden, die den einzelnen Kanälen zugeführt werden.

Ein erstes Beispiel hierfür zeigt Figur 2. Die Lichtstrahlen 1011, 1012, 1013 generieren die Sensoreingabesignale 101 des ersten Kanals. Die Lichtstrahlen 2011, 2012, 2013 generieren die Sensoreingabesignale 201 des zweiten Kanals. Die Lichtstrahlen 1011, 1012, 1013 des ersten Kanals und die Lichtstrahlen 2011, 2012, 2013 des zweiten Kanals bilden eine alternierende Anordnung.

Im fehlerfreien Betrieb des Sensors 10 sind beide Kanäle aktiv und dementsprechend wird mit den Lichtstrahlen 1011, 1012, 1013 des ersten Kanals und den Lichtstrahlen 2011, 2012, 2013 des zweiten Kanals eine Schutzfeldüberwachung ausgeführt, wobei die Auflösung bei der Objektdetektion dem Abstand d zwischen zwei benachbarten Sendern 110 beziehungsweise Empfängern 120 entspricht.

Tritt in einem Kanal ein interner Fehler auf, wird dessen Schaltausgang 103, 203 abgeschaltet. Mit dem noch intakten Kanal erfolgt dann ein degradierter Betrieb. Da dann nur die Strahlachsen dieses Kanals zur Objektdetektion zur Verfügung stehen, erfolgt die Objekterfassung mit einer reduzierten Auflösung, da der Abstand dieser Strahlachsen 2d beträgt.

Während im fehlerfreien, uneingeschränkten Betrieb der Lichtvorhang mit nicht reduzierter Auflösung arbeitet, so dass insbesondere keine Körperteile wie Hände einer Person erfasst werden können, arbeitet der Lichtvorhang im degradierten Betrieb mit reduzierter Auflösung, so dass dann nur noch größere Körperteile wie Arme einer Person erfasst werden können. Der degradierte Betrieb der Anlage ist hieran angepasst, so dass die Anlage nur noch Arbeitsbewegungen ausführt, bei welchen der degradierte Betrieb mit reduzierter Auflösung des Lichtvorhangs noch eine ausreichende Absicherung gewährleistet.

Figur 3 zeigt ein weiteres Anwendungsbeispiel. Im Unterschied zum Beispiel gemäß Figur 2 sind nur die Lichtstrahlen 1011, 1012 des ersten Kanals und die Lichtstrahlen 2011, 2012 des zweiten Kanals alternierend angeordnet. Die Lichtstrahlen 1013, 2013 und 1014, 2014 sind dagegen beiden Kanälen zugeordnet.

Bei Ausfall eines Kanals ist dann mit dem anderen Kanal nur mit den Lichtstrahlen 1011, 1012 beziehungsweise 2011, 2012 ein degradierter Betrieb möglich, nicht aber mit den Lichtstrahlen 1013, 2013, 1014, 2014, die beiden Kanälen zugeordnet sind.

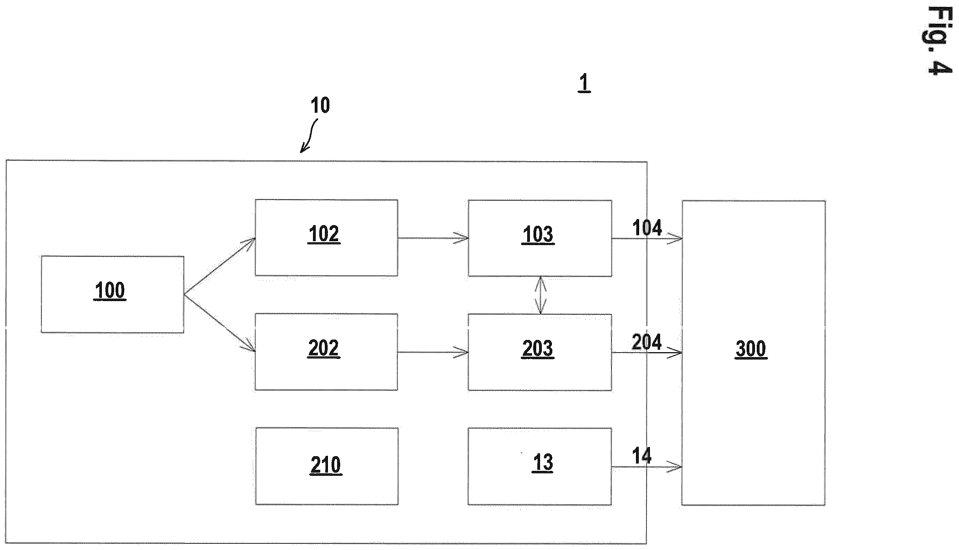

Figur 4 zeigt ein weiteres Ausführungsbeispiel der erfindungsgemäßen Überwachungseinrichtung 1. Diese Ausführungsform unterscheidet sich nur dadurch, dass der Sensor 10 einkanalige Sensoreingabesignale 100 generiert, die den Logikeinheiten 102, 202 beider Kanäle zugeführt sind. In den Logikeinheiten 102, 202 können dann für die Sensoreingabesignale 100 unterschiedliche Sensorbereiche für die beiden Kanäle generiert werden. Die Funktionsweise der Überwachungseinrichtung 1 gemäß Figur 4 entspricht ansonsten der Funktionsweise der Überwachungseinrichtung 1 gemäß Figur 3.

### Bezugszeichenliste

- (1): Überwachungseinrichtung
- (10): Sensor
- (11): Sendereinheit
- (12): Empfängereinheit
- (13): Anzeigeeinheit
- (14): Fehlermeldung
- (100): Sensoreingabesignal
- (101): Sensoreingabesignal
- (102): Logikeinheit
- (103): Schaltausgang
- (104): Schaltsignal
- (110): Sender
- (120): Empfänger
- (201): Sensoreingabesignal
- (202): Logikeinheit
- (203): Schaltausgang
- (204): Schaltsignal
- (210): nichtflüchtiger Speicher
- (300): Anlagensteuerung
- (1011 - 1014): Lichtstrahlen
- (2011 - 2014): Lichtstrahlen
- d: Abstand

## Patentansprüche

1. Überwachungseinrichtung (1) mit einem eine mehrkanalige Struktur aufweisenden Sicherheitsgerät, wobei das Sicherheitsgerät ein Sensor (10) ist, wobei das Sicherheitsgerät Schaltausgänge (103, 203) aufweist, über welche Schaltsignale (104, 204) an eine externe Einheit ausgebbar sind, wodurch der Betrieb der externen Einheit steuerbar ist, wobei das Sicherheitsgerät wenigstens zwei Kanäle mit einer Logikeinheit (102, 202) aufweist, wobei in jeder Logikeinheit (102, 202), abhängig von einem Vorhandensein einer Gefahrensituation Schaltsignale (104, 204) generiert werden, die über einen Schaltausgang (103, 203) dieses Kanals ausgebbar sind, dass bei fehlerfreiem Betrieb und Nichtvorhandensein einer Gefahrensituation der Betrieb der externen Einheit durch das Sicherheitsgerät uneingeschränkt freigegeben ist, in dem alle Schalteingänge eingeschaltet sind, dass in jeder Logikeinheit (101, 201) Fehlererkennungsmittel vorgesehen sind, mittels derer Fehler in diesen Logikeinheiten (101, 201) aufdeckbar sind,
**dadurch gekennzeichnet dass** bei Aufdecken eines Fehlers in einem Kanal dessen Schaltausgang (103, 203) abgeschaltet wird und über den anderen Kanal ein degradierter Betrieb der externen Einheit aufrechterhalten wird, wobei mit dem verbleibenden fehlerfreien Kanal eine reduzierte Sensorauswertung erfolgt.

2. Überwachungseinrichtung (1) nach Anspruch 1, **dadurch gekennzeichnet, dass** bei Aufdecken eines Fehlers in einem Schaltausgang (103) oder bei Aufdecken eines Fehlers in beiden Logikeinheiten (101, 201) alle Schaltausgänge (103, 203) abgeschaltet werden, wodurch der externen Einheit ein Systemausfall signalisiert wird.

3. Überwachungseinrichtung (1) nach Anspruch 1 oder 2, **dadurch gekennzeichnet, dass** die Fehlererkennungsmittel zur Durchführung von Selbsttests ausgebildet sind.

4. Überwachungseinrichtung (1) nach einem der Ansprüche 1 bis 3, **dadurch gekennzeichnet, dass** Fehler in einem Schaltausgang (103, 203) eines Kanals in der Logikeinheit (102, 202) des anderen Kanals aufgedeckt werden.

5. Überwachungseinrichtung (1) nach Anspruch 4, **dadurch gekennzeichnet, dass** in einem Schaltausgang (103, 203) ein Querschluss oder ein Schluss gegen eine Betriebsspannung erkannt wird.

6. Überwachungseinrichtung (1) nach einem der Ansprüche 1 bis 5, **dadurch gekennzeichnet, dass** der Sensor (10) eine Sensoreinheit aufweist, die allen Kanälen zugeordnet ist.

7. Überwachungseinrichtung (1) nach einem der Ansprüche 1 bis 5, **dadurch gekennzeichnet, dass** der Sensor (10) eine Sensoreinheit mit mehreren Sensorbereichen aufweist, wobei jeweils ein Sensorbereich einem Kanal zugeordnet ist.

8. Überwachungseinrichtung (1) nach einem der Ansprüche 1 bis 7, **dadurch gekennzeichnet, dass** der Sensor (10) für die Überwachung eines Schutzfelds ausgebildet ist.

9. Überwachungseinrichtung (1) nach einem der Ansprüche 7 und 8, **dadurch gekennzeichnet, dass** die Sensorbereiche von unterschiedlichen Schutzfeldbereichen gebildet sind.

10. Überwachungseinrichtung (1) nach einem der Ansprüche 1 bis 9, **dadurch gekennzeichnet, dass** der Sensor (10) ein optischer Sensor oder ein Radarsensor ist.

11. Überwachungseinrichtung (1) nach Anspruch 10, **dadurch gekennzeichnet, dass** der Sensor (10) ein Lichtvorhang, ein Kamerasensor oder ein Flächendistanzsensor ist.

12. Überwachungseinrichtung (1) nach einem der Ansprüche 1 bis 11, **dadurch gekennzeichnet, dass** der Sensor (10) ein einkanaliges System ist.

13. Überwachungseinrichtung (1) nach einem der Ansprüche 1 bis 12, **dadurch gekennzeichnet, dass** die Steuerung eine sichere Steuerung ist.

14. Überwachungseinrichtung (1) nach einem der Ansprüche 1 bis 13, **dadurch gekennzeichnet, dass** der degradierte Betrieb nur für eine vorgegebene Zeit aufrechterhalten wird.

15. Überwachungseinrichtung (1) nach Anspruch 14, **dadurch gekennzeichnet, dass** die Zeitdauer des degradierten Betriebs in einem nichtflüchtigen Speicher (210) gespeichert wird und der degradierte Betrieb nach einem Spannungsausfall nur für die verbleibende Zeit aufrechterhalten wird.

16. Überwachungseinrichtung (1) nach Anspruch 14 oder 15, **dadurch gekennzeichnet, dass** der degradierte Betrieb durch Abschalten aller Schaltausgänge (103, 203) beendet wird.

17. Überwachungseinrichtung (1) nach einem der Ansprüche 1 bis 16, **dadurch gekennzeichnet, dass** ein Fehler mittels einer Anzeigeeinheit (13) oder mittels eines zusätzlichen Schaltausgangs (103, 203) signalisierbar ist.

18. Verfahren zum Betrieb einer Überwachungseinrichtung (1) mit einem eine mehrkanalige Struktur aufweisenden Sicherheitsgerät, wobei das Sicherheitsgerät ein Sensor (10) ist, wobei das Sicherheitsgerät Schaltausgänge (103, 203) aufweist, über welche Schaltsignale (104, 204) an eine externe Einheit ausgebbar sind, wodurch der Betrieb der externen Einheit steuerbar ist, wobei das Sicherheitsgerät wenigstens zwei Kanäle mit einer Logikeinheit (102, 202) aufweist, wobei in jeder Logikeinheit (102, 202), abhängig von einem Vorhandensein einer Gefahrensituation, Schaltsignale (104, 204) generiert werden, die über einen Schaltausgang (103, 203) dieses Kanals ausgebbar sind, dass bei fehlerfreiem Betrieb und Nichtvorhandensein einer Gefahrensituation der Betrieb der externen Einheit durch das Sicherheitsgerät uneingeschränkt freigegeben ist, in dem alle Schalteingänge eingeschaltet sind, dass in jeder Logikeinheit (101, 201) Fehlererkennungsmittel vorgesehen sind, mittels derer Fehler in diesen Logikeinheiten (101, 201) aufdeckbar sind,
**dadurch gekennzeichnet dass** bei Aufdecken eines Fehlers in einem Kanal dessen Schaltausgang (103, 203) abgeschaltet wird und über den anderen Kanal ein degradierter Betrieb der externen Einheit aufrechterhalten wird, wobei mit dem verbleibenden fehlerfreien Kanal eine reduzierte Sensorauswertung erfolgt.

## Claims

1. Monitoring device (1) with a safety device having a multi-channel structure, wherein the safety device is a sensor (10), wherein the safety device has switching outputs (103, 203) via which switching signals (104, 204) can be output to an external unit, whereby the operation of the external unit can be controlled,
wherein the safety device has at least two channels with a logic unit (102, 202), wherein switching signals (104, 204) are generated in each logic unit (102, 202) depending on the presence of a hazardous situation are generated in each logic unit (102, 202) depending on the presence of a hazardous situation, which can be output via a switching output (103, 203) of this channel, that during fault-free operation and in the absence of a hazardous situation, the operation of the external unit is unrestrictedly enabled by the safety device, in which all switching inputs are switched on, that in each logic unit (101, 201) error detection means are provided by means of which errors in these logic units (101, 201) can be detected,
**characterised in that**, when an error is detected in one channel, its switching output (103, 203) is switched off and degraded operation of the external unit is maintained via the other channel, with reduced sensor evaluation taking place using the remaining error-free channel.

2. Monitoring device (1) according to claim 1, **characterised in that** when an error is detected in a switching output (103) or when an error is detected in both logic units (101, 201), all switching outputs (103, 203) are switched off, thereby signalling a system failure to the external unit.

3. Monitoring device (1) according to claim 1 or 2, **characterised in that** the fault detection means are designed to perform self-tests.

4. Monitoring device (1) according to one of claims 1 to 3, **characterised in that** faults in a switching output (103, 203) of one channel are detected in the logic unit (102, 202) of the other channel.

5. Monitoring device (1) according to claim 4, **characterised in that** a cross-connection or a short circuit against an operating voltage is detected in a switching output (103, 203).

6. Monitoring device (1) according to one of claims 1 to 5, **characterised in that** the sensor (10) has a sensor unit that is assigned to all channels.

7. Monitoring device (1) according to one of claims 1 to 5, **characterised in that** the sensor (10) has a sensor unit with several sensor areas, wherein each sensor area is assigned to a channel.

8. Monitoring device (1) according to one of claims 1 to 7, **characterised in that** the sensor (10) is designed for monitoring a protective field.

9. Monitoring device (1) according to one of claims 7 and 8, **characterised in that** the sensor areas are formed by different protective field areas.

10. Monitoring device (1) according to one of claims 1 to 9, **characterised in that** the sensor (10) is an optical sensor or a radar sensor.

11. Monitoring device (1) according to claim 10, **characterised in that** the sensor (10) is a light curtain, a camera sensor or an area distance sensor.

12. Monitoring device (1) according to one of claims 1 to 11, **characterised in that** the sensor (10) is a single-channel system.

13. Monitoring device (1) according to one of claims 1 to 12, **characterised in that** the control system is a safe control system.

14. Monitoring device (1) according to one of claims 1 to 13, **characterised in** th that the degraded operation is only maintained for a predetermined time.

15. Monitoring device (1) according to claim 14, **characterised in that** the duration of degraded operation is stored in a non-volatile memory (210) and degraded operation is maintained after a power failure only for the remaining time.

16. Monitoring device (1) according to claim 14 or 15, **characterised in that** degraded operation is terminated by switching off all switching outputs (103, 203).

17. Monitoring device (1) according to one of claims 1 to 16, **characterised in that** a fault can be signalled by means of a display unit (13) or by means of an additional switching output (103, 203).

18. Method for operating a monitoring device (1) with a safety device having a multi-channel structure, wherein the safety device is a sensor (10), wherein the safety device has switching outputs (103, 203) via which switching signals (104, 204) can be output to an external unit, whereby the operation of the external unit can be controlled,
wherein the safety device has at least two channels with a logic unit (102, 202), wherein switching signals (104, 204) are generated in each logic unit (102, 202) depending on the presence of a hazardous situation are generated in each logic unit (102, 202) depending on the presence of a hazardous situation, which can be output via a switching output (103, 203) of this channel, that in the event of fault-free operation and the absence of a hazardous situation, the operation of the external unit is unrestrictedly enabled by the safety device, in which all switching inputs are switched on, that in each logic unit (101, 201) error detection means are provided by means of which errors in these logic units (101, 201) can be detected,
**characterised in that** when an error is detected in one channel, its switching output (103, 203) is switched off and degraded operation of the external unit is maintained via the other channel, whereby reduced sensor evaluation takes place with the remaining error-free channel.

## Revendications

1. Dispositif de surveillance (1) avec un dispositif de sécurité à structure multicanaux, dans lequel le dispositif de sécurité est un capteur (10), dans lequel le dispositif de sécurité comporte des sorties de commutation (103, 203) par l'intermédiaire desquelles des signaux de commutation (104, 204) peuvent être émis vers une unité externe, ce qui permet de commander le fonctionnement de l'unité externe,
dans lequel le dispositif de sécurité comporte au moins deux canaux avec une unité logique (102, 202), dans lequel des signaux de commutation (104, 204) sont générés dans chaque unité logique (102, 202) en fonction de la présence d'une situation dangereuse, qui peuvent être émis via une sortie de commutation (103, 203) de ce canal, que pendant le fonctionnement sans défaut et en l'absence d'une situation dangereuse, le fonctionnement de l'unité externe est autorisé sans restriction par le dispositif de sécurité, dans lequel toutes les entrées de commutation sont activées, que dans chaque unité logique (101, 201), des moyens de détection d'erreurs sont prévus, grâce auxquels des erreurs dans ces unités logiques (101, 201) peuvent être détectées,
**caractérisé en ce que**, lorsqu'une erreur est détectée dans un canal, sa sortie de commutation (103, 203) est désactivée et le fonctionnement dégradé de l'unité externe est maintenu via l'autre canal, une évaluation réduite des capteurs ayant lieu à l'aide du canal restant sans erreur.

2. Dispositif de surveillance (1) selon la revendication 1, **caractérisé en ce que** lorsqu'une erreur est détectée dans une sortie de commutation (103) ou lorsqu'une erreur est détectée dans les deux unités logiques (101, 201), toutes les sorties de commutation (103, 203) sont désactivées, signalant ainsi une défaillance du système à l'unité externe.

3. Dispositif de surveillance (1) selon la revendication 1 ou 2, **caractérisé en ce que** les moyens de détection de défaut sont conçus pour effectuer des autotests.

4. Dispositif de surveillance (1) selon l'une des revendications 1 à 3, **caractérisé en ce que** les défauts dans une sortie de commutation (103, 203) d'un canal sont détectés dans l'unité logique (102, 202) de l'autre canal.

5. Dispositif de surveillance (1) selon la revendication 4, **caractérisé en ce qu'**une connexion croisée ou un court-circuit par rapport à une tension de service est détecté dans une sortie de commutation (103, 203).

6. Dispositif de surveillance (1) selon l'une des revendications 1 à 5, **caractérisé en ce que** le capteur (10) comporte une unité de capteur qui est affectée à tous les canaux.

7. Dispositif de surveillance (1) selon l'une des revendications 1 à 5, **caractérisé en ce que** le capteur (10) comporte une unité de capteur avec plusieurs zones de capteur, chaque zone de capteur étant affectée à un canal.

8. Dispositif de surveillance (1) selon l'une des revendications 1 à 7, **caractérisé en ce que** le capteur (10) est conçu pour surveiller un champ de protection.

9. Dispositif de surveillance (1) selon l'une des revendications 7 et 8, **caractérisé en ce que** les zones de capteur sont formées par différentes zones de champ de protection.

10. Dispositif de surveillance (1) selon l'une des revendications 1 à 9, **caractérisé en ce que** le capteur (10) est un capteur optique ou un capteur radar.

11. Dispositif de surveillance (1) selon la revendication 10, **caractérisé en ce que** le capteur (10) est un rideau lumineux, un capteur de caméra ou un capteur de distance de zone.

12. Dispositif de surveillance (1) selon l'une des revendications 1 à 11, **caractérisé en ce que** le capteur (10) est un système monocanal.

13. Dispositif de surveillance (1) selon l'une des revendications 1 à 12, **caractérisé en ce que** le système de commande est un système de commande sécurisé.

14. Dispositif de surveillance (1) selon l'une des revendications 1 à 13, **caractérisé en ce que** le fonctionnement dégradé n'est maintenu que pendant un temps prédéterminé.

15. Dispositif de surveillance (1) selon la revendication 14, **caractérisé en ce que** la durée du fonctionnement dégradé est stockée dans une mémoire non volatile (210) et que le fonctionnement dégradé n'est maintenu après une panne de courant que pendant le temps restant.

16. Dispositif de surveillance (1) selon la revendication 14 ou 15, **caractérisé en ce que** le fonctionnement dégradé est interrompu par la désactivation de toutes les sorties de commutation (103, 203).

17. Dispositif de surveillance (1) selon l'une des revendications 1 à 16, **caractérisé en ce qu'**un défaut peut être signalé au moyen d'une unité d'affichage (13) ou au moyen d'une sortie de commutation supplémentaire (103, 203).

18. Procédé pour faire fonctionner un dispositif de surveillance (1) avec un dispositif de sécurité ayant une structure multicanaux, dans lequel le dispositif de sécurité est un capteur (10), dans lequel le dispositif de sécurité comporte des sorties de commutation (103, 203) par l'intermédiaire desquelles des signaux de commutation (104, 204) peuvent être émis vers une unité externe, ce qui permet de commander le fonctionnement de l'unité externe,
dans lequel le dispositif de sécurité comporte au moins deux canaux avec une unité logique (102, 202), dans lequel des signaux de commutation (104, 204) sont générés dans chaque unité logique (102, 202) en fonction de la présence d'une situation dangereuse, 204) sont générés dans chaque unité logique (102, 202) en fonction de la présence d'une situation dangereuse, qui peuvent être émis via une sortie de commutation (103, 203) de ce canal, que dans le cas d'un fonctionnement sans défaut et en l'absence d'une situation dangereuse, le fonctionnement de l'unité externe est autorisé sans restriction par le dispositif de sécurité, dans lequel toutes les entrées de commutation sont activées, que dans chaque unité logique (101, 201), des moyens de détection d'erreurs sont prévus, grâce auxquels des erreurs dans ces unités logiques (101, 201) peuvent être détectées,
**caractérisé en ce que** lorsqu'une erreur est détectée dans un canal, sa sortie de commutation (103, 203) est désactivée et le fonctionnement dégradé de l'unité externe est maintenu via l'autre canal, ce qui permet une évaluation réduite du capteur avec le canal restant sans erreur.
